# EUROPÄISCHE PATENTSCHRIFT

(11) **EP 0 842 372 B1**
(45) Veröffentlichungstag und Bekanntmachung des Hinweises auf die Patenterteilung: **07.11.2001**
(21) Anmeldenummer: 96930121.7
(22) Anmeldetag: 29.08.1996
(51) Int. Cl.: F16D 69/04

(54) **VERFAHREN ZUM ANKLEBEN EINES BREMSBELAGS AN EINEN BREMSBELAGTRÄGER**
METHOD OF BONDING A BRAKE LINING TO A BRAKE LINING CARRIER
PROCEDE DE FIXATION D'UNE GARNITURE DE FREIN SUR UN SUPPORT DE PLAQUETTE DE FREIN PAR COLLAGE

(30) Priorität: 31.08.1995 DE 19532230
(43) Veröffentlichungstag der Anmeldung: 20.05.1998
(73) Patentinhaber: Frimatec Ingenieurgesellschaft mbH, 45899 Gelsenkirchen (DE)
(72) Erfinder: GORNIK, Fred, D-45701 Herten (DE); CZARNOWSKI, Klaus-Peter, D-45701 Herten (DE)
(74) Vertreter: Spalthoff, Adolf, Dipl.-Ing.
(86) Internationale Anmeldenummer: EP9603788
(87) Internationale Veröffentlichungsnummer: WO9708475

(56) Entgegenhaltungen:
- FR-A- 2 164 139
- GB-A- 1 593 804
- US-A- 3 891 825
- US-A- 4 045 608
- US-A- 4 187 777
- PATENT ABSTRACTS OF JAPAN vol. 018, no. 341 (M-1629), 28.Juni 1994 & JP 06 081868 A (TOYOTA MOTOR), 22.März 1994,

## Beschreibung

Die Erfindung bezieht sich auf ein Verfahren zum Ankleben eines Bremsbelags an einen Bremsbelagträger nach dem Oberbegriff des Patentanspruchs 1.

Aus der GB-A-1 593 801 ist ein Verfahren zum Ankleben eines Bremsbelags an einem Bremsbelagträger bekannt, bei dem der Bremsbelagträger mit dem Bremsbelag zusammengeklebt wird, wobei die zusammengeklebten Bremsbelagträger und Bremsbeläge miteinander verspannt und im miteinander verspannten Zustand aufgeheizt, auf der Aufheiztemperatur gehalten und abgekühlt werden. Hinsichtlich der Dauer der Aufheizung ist in der genannten Druckschrift eine Zeitspanne vorgegeben, die zwischen 45 und 105 Sekunden beträgt. Die aufgeheizte Einheit aus Bremsbelag und Bremsbelagträger wird nach Erreichen dieser Aufheiztemperatur für 5 Sekunden auf dem Niveau der Aufheiztemperatur gehalten. Hinsichtlich der Art und Weise des Abkühlvorgangs oder hinsichtlich dessen Dauer werden in der genannten Druckschrift keine Erläuterungen gegeben. Der Spanndruck, mit dem der Bremsbelagträger und der Bremsbelag gegeneinandergespannt werden, wird durch Druckfedern aufgebracht, die entsprechend ihrer Vorspannung Druckkräfte auf die Einheit aus Bremsbelagträger und Bremsbelag ausüben. Hierbei ist es möglich, Dimensionierungstoleranzen mittels einer keilförmigen Stelleneinrichtung auszugleichen.

Ausgehend von dem vorstehend geschilderten Stand der Technik liegt der Erfindung die Aufgabe zugrunde, das gattungsgemäße Verfahren zum Ankleben eines Bremsbelags an einen Bremsbelagträger derart weiterzubilden, daß diejenigen Parameter, die die Qualität der herzustellenden Klebeverbindung wesentlich beeinflussen, besser erfaßt und gesteuert werden können.

Diese Aufgabe wird erfindungsgemäß dadurch gelöst, daß für die wärmetechnische Behandlung der zusammengespannten Einheit aus Bremsbelag und Bremsbelagträger exakte Werte vorgegeben werden, wobei der Aufheizvorgang bis zu ca. 2 Minuten, der Zeitraum, während dem die Aufheiztemperatur nach ihrem Erreichen aufrecht erhalten wird, ca. 1 bis 2 Minuten und der Abkühlvorgang bis zu ca. 1 Minuten betragen. Darüber hinaus wird durch eine die sich während des Abkühlvorgangs und des Aufheizvorgangs ändernde Temperatur berücksichtigende Konstanthaltung des Spanndrucks, mittels dem die den Bremsbelag und den Bremsbelagträger aufweisende Einheit zusammengespannt wird, sichergestellt, daß aufgrund der Temperaturänderungen sich ändernde Abmessungen keine Schwankungen des Spanndrucks bewirken. Aufgrund dieser Vorgaben läßt sich die Qualität der herzustellenden Klebeverbindung zwischen Bremsbelagträger und Bremsbelag exakt vorbestimmen bzw. entsprechend einem Anforderungsprofil auswählen.

Bei bestimmten Klebstoffen ist die Weiterbildung des erfindungsgemäßen Verfahrens gemäß Patentanspruch 2 erforderlich bzw. besonders vorteilhaft.

Bei dem Verfahren gemäß Patentanspruch 3 herrschen an der den Bremsbelagträger und den Bremsbelag verbindenden Klebstoffschicht während des gesamten Zeitraums zwischen dem Beginn der Erwärmung und dem Ende der Abkühlung exakt vorgebbare Druckverhältnisse, die zu einer gleichmäßigen Qualität der Verbindung zwischen dem Bremsbelag und dem Bremsbelagträger führen.

Ein geeigneter Spanndruck ergibt sich gemäß Patentanspruch 4.

Zur Gewährleistung konstanter Druckverhältnisse während der Andruckphase, in der der Bremsbelag und der Bremsbelagträger bei dazwischen angeordnetem Klebstoff gegeneinander gespannt werden, ist die Weiterbildung gemäß Patentanspruch 5 vorteilhaft.

Die Druckverhältnisse im Bereich der Klebstoffschicht zwischen dem Bremsbelagträger und dem Bremsbelag lassen sich gemäß Patentanspruch 6 noch weiter vergleichmäßigen.

Bei den vorteilhaften Ausführungsformen des erfindungsgemäßen Verfahrens gemäß Patentanspruch 7 und 8 lassen sich durch weitestgehende Gleichhaltung der die Qualität der Klebeverbindung zwischen Bremsbelagträger und Bremsbelag beeinflussenden Parameter Endprodukte mit derselben Qualität erreichen. Außerdem ist es möglich, durch geringfügige beabsichtigte Veränderungen der einstellbaren Druckverhältnisse in erwünschter Weise unterschiedliche Qualitäten hinsichtlich der Klebeverbindung zwischen dem Bremsbelagträger und dem Bremsbelag anzustreben.

Bei der Ausführungsform gemäß Patentanspruch 9 ist auch bei unterschiedlichen Bremsbelagmaterialien, unterschiedlichen Klebstoffen und unterschiedlichen Werkstoffen des Bremsbelagträgers sowie unterschiedlichen angestrebten Qualitäten des Endprodukts jeweils ein optimaler Spanndruck auswähl- und damit ein optimales Endprodukt erzielbar.

Bei der Realisierung des erfindungsgemäßen Verfahrens hat sich der Temperaturbereich gemäß Patentanspruch 10 als besonders zweckmäßig und vorteilhaft herausgestellt.

Die Erwärmung des Bremsbelagträgers auf die Aufheiztemperatur kann in konstruktiv wenig aufwendiger und exakt steuerbarer Weise gemäß Patentanspruch 11 erfolgen.

Die Abkühlung des Bremsbelagträgers kann ohne großen Aufwand gemäß Patnetanspruch 12 durchgeführt werden.

Gemäß Patentanspruch 13 läßt sich die Aufheiztemperatur vergleichsweise schnell erreichen.

Gemäß Patentanspruch 14 kann die gewünschte Aufheiztemperatur erreicht werden, ohne daß bei diesem Vorgang die für optimal erachtete Aufheiztemperatur überschritten wird. Bei Induktionsöfen od.dgl. wird im Gegensatz zum erfindungsgemäßen Verfahren zwecks schneller Erreichung der erwünschten Aufheiztemperatur diese zunächst überschritten, woraufhin dann der Induktionsofen zurückgefahren wird usw., so daß sich nach einem mehrmaligen Schwingen des tatsächlichen Temperaturverlaufs um die optimale Aufheiztemperatur diese letztlich erst einstellt.

In den meisten Anwendungsfällen ist der Temperaturbereich gemäß Patentanspruch 15 vorteilhaft.

Zur Gewährleistung gleichmäßiger Verfahrensparameter ist die Vorgehensweise gemäß Patentanspruch 16 vorteilhaft.

Zur Erreichung größerer Stückzahlen ist gemäß Patentanspruch 17 eine mehr oder weniger gleichmäßige Ausnutzung von der Aufheizung und der Abkühlung dienenden Aggregaten möglich.

Eine kontrolliert stattfindende Abkühlung des Bremsbelagträgers und des Bremsbelags ergibt sich gemäß Patentanspruch 18, wodurch in jedem Fall vermieden wird, daß eine Abkühlung unter die Temperatur der kalten Luftströmung erfolgt.

Es hat sich erwiesen, daß qualitativ hochwertige Klebeverbindungen zwischen dem Bremsbelag und dem Bremsbelagträger gemäß Patentanspruch 19 erreichbar sind.

Gemäß Patentanspruch 20 kann das erfindungsgemäße Verfahren noch besser gesteuert werden.

Das erfindungsgemäße Verfahren ist unabhängig davon durchführbar, ob der Bremsbelagträger gemäß Patentanspruch 21 bzw. 22 der Metallschuh eines Bremsbackens einer Trommelbremse oder die Belagträgerplatte einer Scheibenbremse ist.

Bei einer erfindungsgemäßen Vorrichtung zum Ankleben eines Bremsbelags an einen Bremsbelagträger gemäß Patentanspruch 23 kann während des Zeitraums, in dem der Bremsbelag und der Bremsbelagträger mittels der Spanneinrichtung gegeneinander gepreßt werden, die Temperatur des Klebstoffs, der zwischen dem Bremsbelag und dem Bremsbelagträger angeordnet ist, exakt den gewünschten Verlauf einnehmen, wobei darüber hinaus der Spanndruck, der auf den Klebstoff wirkt, exakt regelbar ist.

In besonders einfacher Weise läßt sich ein konstanter Spanndruck zwischen dem Bremsbelag und dem Bremsbelagträger gemäß Patentanspruch 24 erzielen.

Gemäß Patentanspruch 25 läßt sich die erwünschte Aufheiz- bzw. Abkühltemperatur ohne kurzzeitiges Über- oder Unterschreiten derselben schnell erreichen.

Zweckmäßigerweise weist die Heizeinrichtung gemäß Patentanspruch 26 einen Wärmetauscher auf.

Um über die Abmessungen des Bremsbelags bzw. des Bremsbelagträgers eine gleichmäßige Aufheizung bzw. Abkühlung derselben zu erreichen, ist die Ausgestaltung gemäß Patentanspruch 27 vorteilhaft.

Im folgenden wird die Erfindung anhand von Ausführungsform unter Bezugnahme auf die Zeichnungen näher erläutert.

Es zeigen:
- Figur 1: ein Blockdiagramm, in dem die einzelnen Verfahrensschritte beim Aufkleben eines Bremsbelags auf einen Bremsbelagträger angegeben sind;
- Figur 2: eine erfindungsgemäße Vorrichtung zur automatischen Herstellung einer Klebeverbindung zwischen Bremsbelag und Bremsbelagträger;
- Figur 3: eine Ausführungsform einer Station des erfindungsgemäßen Verfahrens, wobei diese Station zur Anbringung bzw. zum Ankleben von Bremsbelägen an Bremsbelagträgern dient;
- Figur 4: eine Ausführungsform einer bei dem erfindungsgemäßen Verfahren bzw. der erfindungsgemäßen Vorrichtung eingesetzten Spanneinrichtung; und
- Figur 5: eine schematische Darstellung einer bei dem erfindungsgemäßen Verfahren bzw. bei der erfindungsgemäßen Vorrichtung eingesetzten Heizeinrichtung.

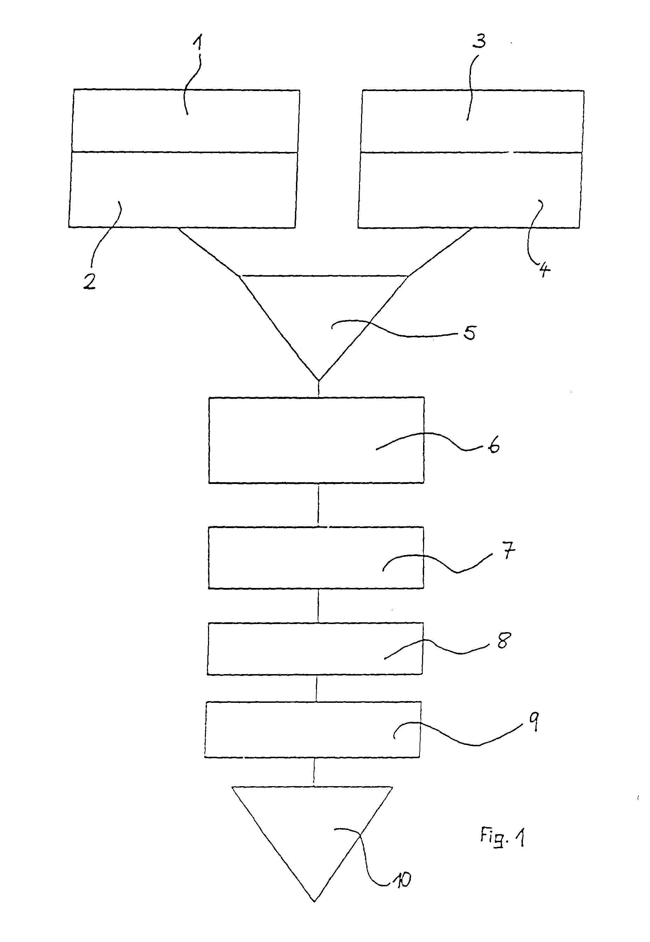

In Figur 1 ist der grundsätzliche Ablauf der Verfahrensschritte, die im Zusammenhang mit dem Ankleben von Reib- bzw. Bremsbelägen an den Metallschuhen von Trommelbremsbacken erfolgen, dargestellt. Zunächst werden die Metallschuhe in einer Anlage 1 vorbehandelt, wobei sie gereinigt und mit Sandstrahlen beaufschlagt werden. Somit gelangen die Metallschuhe entfettet und gesandstrahlt in die Anlage 2, in die sie beispielsweise von Hand eingegeben werden. In Anlage 2 werden die Metallschuhe mit einem Korrosionsschutz und/oder einem Klebstoff versehen. Die Aufgabe der Metallschuhe in Anlage 2 erfolgt, wie bereits erwähnt, von Hand. Bei der Aufgabe von Hand kann geprüft werden, ob eine Muldensandbestrahlung mit einbezogen werden soll. Die Metallschuhe werden in ein temperiertes Kleberbad getaucht oder mit Klebstoff versehen. Die Zuführung des Klebstoffes erfolgt automatisch aus Gebinden. Nach der Entnahme der Metallschuhe aus dem Kleberbad werden diese in einen Ofen eingeführt, in dem sie bei ca. 70 Grad C bis 80 Grad C über einen Zeitraum von 10 bis 20 min zur Trocknung des Klebstoffes verbleiben. Danach werden die entsprechend behandelten Metallschuhe zwischengelagert.

In Anlage 3 wird beispielsweise als aufgerolltes Material eingesetztes Reibmaterial zwecks Konfektionierung vorbehandelt.

In Anlage 4 wird der Klebstoff auf die durch die Konfektionierung des Reibmaterials entstandenen Bremsbeläge aufgebracht. Bei der Konfektionierung wurde das als Rollenware anfallende Reibmaterial maschinell bearbeitet und auf Maß geschnitten. Die hierdurch entstehenden fertigen Bremsbeläge werden in einem Universalmagazin gestapelt und aus diesem Universalmagazin heraus der Anlage 4 zugeführt. Darauf folgt das Aufwalzen des Klebstoffs auf den Bremsbelag, beispielsweise in einer Hestica-Anlage. Die Schichtstärke, in der der Klebstoff auf den Bremsbelag aufgebracht wird, kann vorteilhaft etwa 0,2 mm oder weniger betragen. Daraufhin erfolgt ein Abtrocknen des Klebstoffs für 2 bis 3 min bei einer Temperatur von 70 Grad C bis 90 Grad C. Hierbei ist darauf zu achten, daß nach dem Abtrocknen des Klebstoffes das Lösungsmittel oder das Wasser aus diesem entfernt sein muß.

Hinter der Anlage 2, in der die Metallschuhe durch Eintauchen in das Kleberbad mit einem Korrosionsschutz versehen werden, und der Anlage 4, in der der Klebstoff automatisch auf die vorher konfektionierten Bremsbeläge aufgebracht wird, werden die Metallschuhe und die Bremsbeläge in einer Stufe 5 einander zugeführt.

In Anlage 6 werden jeweils ein Metallschuh und ein Bremsbelag automatisch aneinandergeklebt. Nach dem Auflegen des aus der Anlage 4 stammenden Bremsbelags auf den aus der Anlage 2 stammenden Metallschuh werden der Metallschuh und der Bremsbelag mittels eines unter einem spezifischen Druck stehenden Spannbandes in Anlage 6 aneinander angedrückt. Der Metallschuh wird z.B. in Form einer Widerstandsheizung auf die vorgegebene Temperatur gebracht und auf dem entsprechenden Temperaturniveau gehalten. Die Aufnahme bzw. die Lagerung des Metallschuhs erfolgt mittels zweier Klemmhalter, die eine universelle Aufnahmeeinrichtung ausbilden. Hierbei ist auf einer Seite des Metallschuhs zur Fixierung von dessen Position ein Anschlag ausgebildet. Zwecks Erwärmung über Widerstandsheizung werden an einem Bandagenblech Kontakte angelegt. Die Aushärtung des Klebstoffes erfolgt während einer Zeit von bis zu 2 min und einer Temperatur von 200 Grad C bis 230 Grad C bei Konstanthaltung eines Anpreßdruckes von 49 bis 150 N/cm2. Vor Beendigung der Druckbeaufschlagung erfolgt eine Abkühlung des Metallschuhs, z.B. durch Abschaltung der induktiven Heizeinrichtung für ca. 1 min. Danach wird ein den Metallschuh und den angeklebten Bremsbelag aufweisender fertiger Bremsbacken aus der Anlage 6 entnommen.

Diese geraten anschließend wahlweise, je nach eingesetztem Klebermaterial, nacheinander in die als Durchlaufofen ausgebildete Anlage 7 und die als Abkühleinrichtung ausgebildete Anlage 8. Die Aushärtung des Klebstoffs erfolgt im Durchlaufofen der Anlage 7 für max. ca. 1 Stunde bei ca. 180 Grad C.

Es sei darauf hingewiesen, daß sich diese Werte auf einen als Umluftofen ausgebildeten Durchlaufofen beziehen. Bei anderen Ofentypen müssen die genannten Angaben entsprechend umgerechnet werden.

Alternativ können auch Klebersysteme eingesetzt werden, welche ohne eine zusätzliche Ofenhärtung funktionieren. In solchen Fällen kann eine Ofenaushärtung entfallen.

Nach der Aushärtung im Durchlaufofen werden die Bremsbacken in der Abkühleinrichtung der Anlage 8 auf unter 80 Grad C abgekühlt, um sie auf den Schleifvorgang bzw. auf eine manuelle Entnahme vorzubereiten.

Alternativ kann statt der Abkühleinrichtung auch oder aber zusätzlich das Aufbringen eines Decklackes als Korrosionsschutz in Anlage 8 erfolgen.

Aus der Abkühleinrichtung der Anlage 8 werden die Bremsbacken in die Anlage 9 abgegeben, in der die Bremsbacken überschliffen werden.

Die eine Schleifvorrichtung aufweisende Anlage 9 wird mittels eines Manipulators beschickt. In die Schleifvorrichtung gerät immer ein Bremsbacken zum Überschleifen. Das Überschleifen des Bremsbackens erfolgt mittels Längsschliff oder Querschliff. Während des Schleifvorgangs erfolgt eine automatische Maßkontrolle. Der Schleifvorgang wird zwecks Qualitätssicherung dokumentiert. Es erfolgt eine 100%ige Kontrolle aller Bremsbacken. Aufgrund dieser Kontrolle wird die Schleifvorrichtung gesteuert.

Es ist somit sichergestellt, daß aus der Anlage 9 nur Bremsbacken entnommen werden, die den gewünschten Qualitätsanforderungen genügen. Hierdurch wird sichergestellt, daß die gesamte Vorrichtung mit den auf den Anlagen durchgeführten Verfahrensschritten erstausrüstungsfähig ist.

In der Stufe 10 werden die fertiggestellten und kontrollierten Bremsbacken der weiteren Verwendung zugeführt. Die hergestellten Bremsbeläge sind erstausrüstungsfähig.

Die gesamte Vorrichtung ist explosionsgeschützt ausgestaltet, da wahlweise neben wasserlöslichen Klebersystemen auch ein lösungsmittelhaltiger Klebstoff eingesetzt werden kann.

Die Klebstoffe werden vorzugsweise durch Aufwalzen aufgetragen.

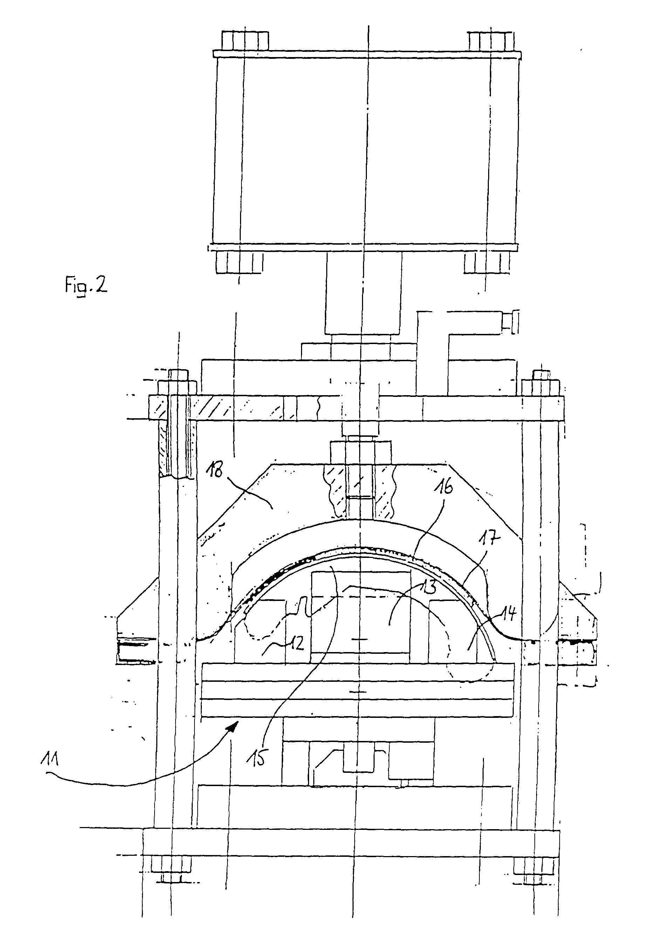

In Figur 2 ist eine vorteilhafte Ausführungsform für die Anlage 6, in der automatisch die Klebeverbindung zwischen dem Metallschuh und dem Bremsbelag hergestellt wird, dargestellt.

Auf einer Stützeinrichtung 11 sind Halterungen 12, 13, 14 vorgesehen, die zur Fixierung und Positionierung eines Metallschuhs 15 dienen. An den Metallschuh ist bereits mittels einer nicht dargestellten Kleberschicht ein Bremsbelag 16 vorläufig angebracht. Der Bremsbelag 16 wird mittels eines mit einem hydraulischen Druck beaufschlagten Spannbandes 17 gegen den Metallschuh 15 angedrückt. Zur Positionierung des Spannbandes 17 ist ein räumlich in bezug auf die Stützeinrichtung 11 bzw. die Halterungen 12, 13, 14 versetzbares Andruckjoch 18 vorgesehen. Das Spannband 17 ist mit einem konstanten Druck beaufschlagbar. Hierdurch kann der Bremsbelag 16 während des vorgegebenen Zeitraums mit konstantem Andruck gegen den Metallschuh 15 gedrückt werden.

In die Stützeinrichtung 11 bzw. die Halterungen 12, 13, 14 ist eine Heizeinrichtung integriert, mittels der der Metallschuh 15 auf die gewünschte Temperatur in dem gewünschten Zeitraum aufheizbar ist. Des weiteren kann in die Stützeinrichtung 11 bzw. in die Halterungen 12, 13, 14 eine Kühleinrichtung integriert sein, mittels der der erhitzte Metallschuh 15 in gewünschter Zeit auf eine vorgebbare Temperatur abgekühlt werden kann.

Sowohl der Andruck, der mittels des Spannbandes 17 auf den Bremsbelag 16 ausgeübt wird, als auch die Erhitzung und die Abkühlung des Metallschuhs 15 können in der vorstehend geschilderten Vorrichtung exakt geregelt und überwacht werden. Der Andruck zwischen dem Bremsbelag 16 und dem Metallschuh 15 wird aufgehoben, nachdem die Abkühlung des Metallschuhs 15 erfolgt ist und die vorgegebene Temperatur für den gewünschten Zeitraum eingehalten worden ist. Nach Verlassen der vorstehend geschilderten Vorrichtung wird der aus dem Metallschuh und dem Bremsbelag bestehende Bremsbacken in die als Durchlaufofen ausgebildete Anlage 7 eingeführt.

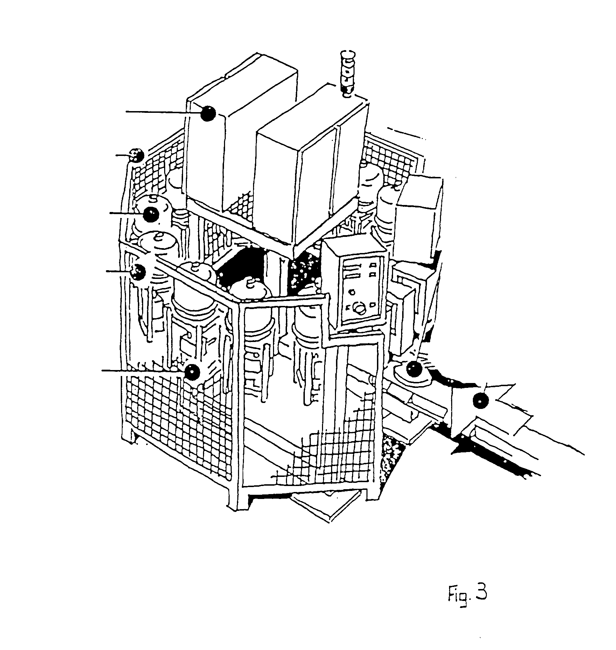

In Figur 3 ist eine Ausführungsform für eine Anlage 6 gemäß Figur 1 dargestellt. Bei der in Figur 3 dargestellten Ausführungsform hat die Anlage 6 mehrere der in Figur 2 gezeigten Vorrichtungen, diese Vorrichtungen laufen auf einer kreisförmigen Bahn endlos um. Die Laufzeit einer dieser Vorrichtungen zwischen einer Position, in der die genannte Vorrichtung einen Metallschuh 15 mit vorläufig angeklebtem Bremsbelag 16 übernimmt, und einer Position, in der sie diese Einheit aus Metallschuh 15 und Bremsbelag 16 mit gehärteter Klebeverbindung an die Anlage 7 abgibt, der für die Herstellung der Klebeverbindung benötigten Verweildauer entspricht.

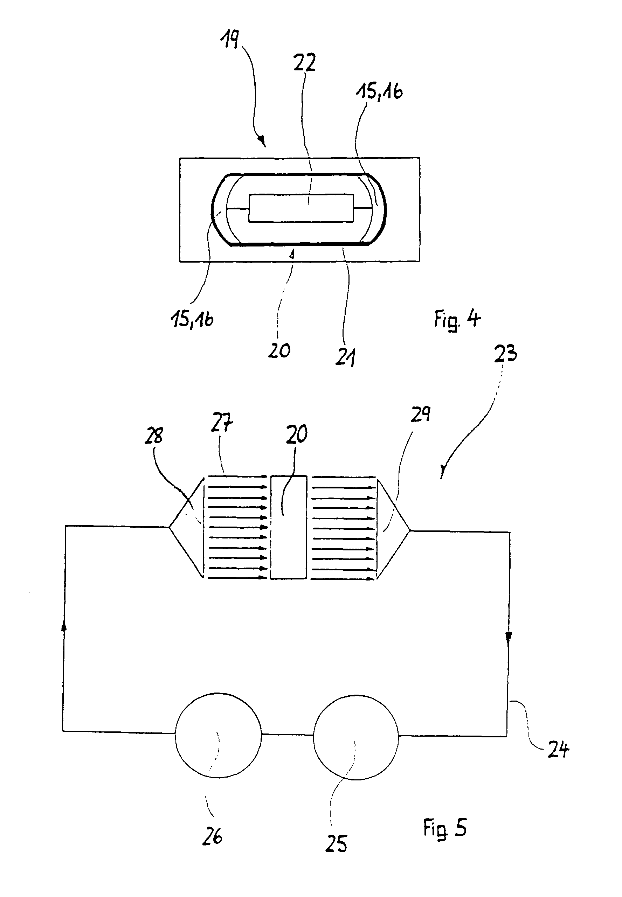

In Figur 4 ist ein Ausführungsbeispiel einer Spannstation 19 gezeigt, in der eine Spanneinrichtung 20 angeordnet ist, mittels der zwei jeweils einen Bremsbelagträger 15 und einen Bremsbelag 16 aufweisende Anordnungen aufgenommen sind. Zur Spanneinrichtung 20 gehört ein Spannband 21 sowie ein einstellbarer Spannzylinder 22, mittels dem im Zusammenwirken mit dem Spannband 21 der Spanndruck für die Anordnung aus dem Bremsbelagträger 15 und dem Bremsbelag 16 aufgebracht wird.

Diese Spanneinrichtung ist geeignet, um über die Spannstation 19 den Spanndruck zu konditionieren.

Mittels spezifischer Einstellung bzw. Steuerung des Spannzylinders 22 wird im Zusammenwirken des Spannzylinders 22 und des Spannbandes 21 für jeweils zwei Anordnungen aus Bremsbelagträger 15 und Bremsbelag 16 immer der genaue Spanndruck aufgebracht. Bei der Bemessung des Spanndrucks können die jeweilige Aufheiztemperatur und das spezielle Material der Bremsbeläge und des Klebers berücksichtigt werden, wobei letzterer wasserlöslich oder lösungsmittelhaltig sein kann.

Eine in Figur 5 dargestellte Heizeinrichtung 23 birgt in der dargestellten Weise auf die in Figur 5 lediglich schematisch dargestellte Spanneinrichtung 20, in der die beiden Anordnungen mit jeweils einem Bremsbelagträger 15 und einem Bremsbelag 16 aufgenommen sind.

Zur Heizeinrichtung 23 gehört ein Strömungskanal 24, in dem ein Ventilator 25 und ein Wärmetauscher 26 angeordnet sind.

Im Wärmetauscher 26 wird die vom Ventilator 25 geförderte Luftströmung auf einer konstanten Temperatur gehalten; diese Temperatur entspricht der Aufheiztemperatur, welche für die Anordnungen aus Bremsbelagträger 15 und Bremsbelag 16 vorgesehen ist, die in der Spanneinrichtung 20 aufgenommen sind.

Aus dem Wärmetauscher 26 gerät die entsprechend aufgeheizte Luftströmung 27 durch einen einen vergleichsweise großen Querschnitt aufweisenden Ausgangsabschnitt 28 des Strömungskanals 24 in die Spanneinrichtung 20. Die Abmessungen des Ausgangsabschnitts 28 des Strömungskanals 24 sind so gewählt, daß der gesamte Bereich der beiden den Bremsbelagträger 15 und den Bremsbelag 16 aufweisenden Anordnungen gleichmäßig bestrichen wird.

Nach dem Durchtritt durch die Spanneinrichtung 20 wird die Luftströmung 27 mittels eines ebenfalls einen vergleichsweise großen Querschnitt aufweisenden Eingangsabschnitts des Strömungskanals 24 wieder in denselben eingeführt.

Der zwischen dem Bremsbelagträger 15 und dem Bremsbelag 16 angeordnete Klebstoff wird durch die heiße Luftströmung 27, die mit hoher Geschwindigkeit an der Spannvorrichtung 20 vorbeigeführt wird, ausgehärtet. Die Verbleibzeit innerhalb der Heizeinrichtung 23, welche sich aus der Aufheizphase und demjenigen Zeitraum zusammensetzt, über den die Aufheiztemperatur aufrechterhalten wird, beträgt bis zu ca. 4 min.

Eine in den Figuren nicht dargestellte Kühleinrichtung ist im Prinzip etwa wie die in Figur 5 dargestellte Heizeinrichtung 23 ausgebildet, wobei jedoch auf den Wärmetauscher 26 verzichtet werden kann. Die Temperatur einer von der Kühlvorrichtung zur Verfügung gestellten vergleichsweise kalten Luftströmung liegt unterhalb von 100 Grad C. Die Verbleibzeit der Spanneinrichtung 20 innerhalb einer derartigen Kühleinrichtung beträgt ca. 0,5 min.

Hinter der in den Figuren nicht dargestellten Kühleinrichtung werden die mit den Bremsbelägen 16 versehenen Bremsbelagträger automatisch aus den Spanneinrichtungen 20 ausgespannt.

## Patentansprüche

1. Verfahren zum Ankleben eines Bremsbelags (16) an einem Bremsbelagträger (15), bei dem der Bremsbelag (16) und/oder der Bremsbelagträger (15) mit Klebstoff versehen werden, der Bremsbelagträger (15) und der Bremsbelag (16) zusammengepreßt werden und der mit dem Bremsbelag (16) zusammengepreßte Bremsbelagträger aufgeheizt, auf der erreichten Aufheiztemperatur gehalten und dann abgekühlt wird, **dadurch gekennzeichnet, daß** der Aufheizvorgang bis zu ca. 2 min, der Zeitraum, während dem die Aufheiztemperatur nach ihrem Erreichen aufrecht erhalten wird, ca. 1 min bis 2 min und der darauf folgende Abkühlvorgang bis zu ca. 1 min betragen, und daß der Spanndruck, mit dem der Bremsbelagträger (15) und der Bremsbelag (16) gegeneinandergespannt werden, unter Berücksichtigung der sich während des Aufheiz- und des Abkühlvorgangs ändernden Temperatur konstant gehalten wird.

2. Verfahren nach Anspruch 1, bei dem der Spanndruck zwischen dem Bremsbelagträger (15) und dem Bremsbelag (16) aufgehoben wird, wenn der Bremsbelagträger (15) und der Bremsbelag (16) abgekühlt sind.

3. Verfahren nach Anspruch 1 oder 2, bei dem der Bremsbelagträger (15) und der Bremsbelag (16) gegeneinander gespannt und im gegeneinander gespannten Zustand auf eine vorgegebene Aufheiztemperatur erwärmt, für einen bestimmten Zeitraum auf der vorgegebenen Aufheiztemperatur gehalten und auf eine vorgegebene Abkühltemperatur abgekühlt werden.

4. Verfahren nach einem der Ansprüche 1 bis 3, bei dem der Spanndruck, mit dem der Bremsbelagträger (15) und der Bremsbelag (16) gegeneinander gespannt werden, zwischen 49 N/cm2 und 150 N/cm2 liegt.

5. Verfahren nach einem der Ansprüche 1 bis 4, bei dem der Spanndruck zum Gegeneinanderspannen des Bremsbelagträgers (15) und des Bremsbelags (16) mittels eines spezifisch druckbeaufschlagten Spannbandes oder Andruckstempels erzeugt wird.

6. Verfahren nach Anspruch 5, bei dem der spezifische Druck des Spannbandes (17) oder Andruckstempels so geregelt wird, daß der Spanndruck, mit dem der Bremsbelagträger (15) und der Bremsbelag (16) gegeneinander gespannt werden, konstant gehalten wird.

7. Verfahren nach Anspruch 5 oder 6, bei dem für jedes Bauteil einer Spanneinrichtung (20) ein spezifischer Druck exakt vorgegeben wird.

8. Verfahren nach Anspruch 7, bei dem vor jedem Spannvorgang für jedes Bauteil der Spanneinrichtung (20) ein spezifischer Druck exakt vorgegeben wird.

9. Verfahren nach einem der Ansprüche 5 bis 8, bei dem der Spanndruck für jedes zu verarbeitende Bremsbelagmaterial, für jeden Klebstoff, für jeden Werkstoff des Bremsbelagträgers (15) und/oder für jede zu erreichende Qualität des fertigen, mit dem Bremsbelag (16) fest verbundenen Bremsbelagträgers (15) exakt definiert eingestellt und vorgelegt wird.

10. Verfahren nach einem der Ansprüche 1 bis 9, bei dem der Bremsbelagträger (15) auf eine Aufheiztemperatur von 200 bis 240, vorzugsweise 200 bis 230 Grad C erwärmt wird.

11. Verfahren nach einem der Ansprüche 1 bis 10, bei dem der Bremsbelagträger (15) direkt in Form einer Widerstandsheizung beheizt wird.

12. Verfahren nach einem der Ansprüche 1 bis 11, bei dem der Bremsbelagträger (15) abgekühlt wird, indem eine den Bremsbelagträger (15) erwärmende Heizeinrichtung abgeschaltet wird.

13. Verfahren nach einem der Ansprüche 1 bis 12, bei dem der Bremsbelagträger (15) und der Bremsbelag (16) im gegeneinander gespannten Zustand zur Erwärmung auf die Aufheiztemperatur mit einer heißen Luftströmung (27) beaufschlagt werden.

14. Verfahren nach Anspruch 13, bei dem die Temperatur der heißen Luftströmung (27) auf dem Niveau der Aufheiztemperatur gehalten wird.

15. Verfahren nach Anspruch 13 oder 14, bei dem die Temperatur der heißen Luftströmung (27) über 200 Grad C gehalten wird.

16. Verfahren nach einem der Ansprüche 13 bis 15, bei dem die Temperatur der heißen Luftströmung (27) während des Aufheizvorgangs und/oder des Zeitraums bis zum Beginn der Abkühlung konstant gehalten wird.

17. Verfahren nach einem der Ansprüche 1 bis 16, bei dem der Abkühlvorgang in räumlicher Trennung vom Aufheizvorgang durchgeführt wird.

18. Verfahren nach einem der Ansprüche 1 bis 17, bei dem der Bremsbelagträger (15) und der Bremsbelag (16) zur Abkühlung auf die Abkühltemperatur in einer Kühlstation mit einer vergleichsweise kalten Luftströmung beaufschlagt werden.

19. Verfahren nach Anspruch 18, bei dem die Temperatur der vergleichsweise kalten Luftströmung unter 100 Grad C ist.

20. Verfahren nach Anspruch 18 oder 19, bei dem die Temperatur der vergleichsweise kalten Luftströmung konstant gehalten wird.

21. Verfahren nach einem der Ansprüche 1 bis 20, bei dem der Bremsbelagträger (15) der Metallschuh (15) eines Bremsbackens einer Trommelbremse ist.

22. Verfahren nach einem der Ansprüche 1 bis 20, bei dem der Bremsbelagträger die Belagträgerplatte einer Scheibenbremse oder ein ähnlich geformtes Teil ist.

23. Vorrichtung zum Ankleben eines Bremsbelags (16) an einen Bremsbelagträger (15), mit einer Spanneinrichtung (11, 12, 13, 14, 17, 18; 20), in der der Bremsbelag (16) und der Bremsbelagträger (15) gegeneinander preßbar sind, einer Heizeinrichtung (23), mittels der der Bremsbelagträger (15) erwärmbar ist, und einer Kühleinrichtung, mittels der der erwärmte Bremsbelagträger (15) abkühlbar ist, **dadurch gekennzeichnet, daß** die Spanneinrichtung (11, 12, 13, 14, 17, 18; 20) einen Spannzylinder (22) aufweist, der so gesteuert ist, daß der Spanndruck, mit dem der Bremsbelagträger (15) und der Bremsbelag (16) gegeneinandergespannt werden, unter Berücksichtigung der sich während des Aufheiz- und des Abkühlvorgangs ändernden Temperatur konstant gehalten wird.

24. Vorrichtung nach Anspruch 23, mit einem Spannband (17) oder einem Andruckstempel, mittels dem der Bremsbelag (16) mit konstantem Druck gegen den Bremsbelagträger (15) andrückbar ist.

25. Vorrichtung nach Anspruch 23 oder 24, bei der die Heizeinrichtung (23) und/oder die Kühleinrichtung einen Ventilator (25) aufweist bzw. aufweisen, mittels dem der Bremsbelagträger (15) und der Bremsbelag (16) im gegeneinander gespannten Zustand mit einer heißen (27) bzw. einer vergleichsweise kalten Luftströmung mit einer konstanten Strömungsrate beaufschlagbar sind.

26. Vorrichtung nach Anspruch 25, bei der die Heizeinrichtung einen Wärmetauscher (26) aufweist, mittels dem die Temperatur der heißen Luftströmung (27) konstant haltbar ist.

27. Vorrichtung nach Anspruch 25 oder 26, bei der ein Strömungskanal (24) der Heiz- (23) und/oder der Kühleinrichtung zumindest in seinem dem Bremsbelagträger (15) und dem Bremsbelag (16) zugeordneten Ausgangs- (28) und Eingangsabschnitt (29) einen Querschnitt aufweist, der so groß ist, daß die gesamte Anordnung aus Bremsbelagträger (15) und Bremsbelag (16) gleichmäßig mit der heißen (27) bzw. der vergleichsweise kalten Luftströmung beaufschlagbar ist.

## Claims

1. Method for adhesively bonding a brake lining (16) to a brake lining carrier (15), wherein the brake lining (16) and/or the brake lining carrier (15) are provided with adhesive, the brake lining carrier (15) and the brake lining (16) are pressed together and the brake lining carrier, which is pressed together with the brake lining (16), is heated, kept at the heating temperature reached and then cooled, **characterised in that** the heating operation lasts up to approximately two minutes, the period during which the heating temperature is maintained once reached lasts approximately from one minute to two minutes and the subsequent cooling operation lasts up to approximately one minute, and **in that** the clamping pressure, at which the brake lining carrier (15) and the brake lining (16) are clamped against each other, is kept constant whilst taking into consideration the temperature which changes during the heating and the cooling operation.

2. Method according to claim 1, wherein the clamping pressure between the brake lining carrier (15) and the brake lining (16) is removed when the brake lining carrier (15) and the brake lining (16) are cooled.

3. Method according to claim 1 or 2, wherein the brake lining carrier (15) and the brake lining (16) are clamped against each other and heated in the state clamped against each other to a predetermined heating temperature, kept at the predetermined heating temperature for a specific length of time and cooled to a predetermined cooling temperature.

4. Method according to any one of claims 1 to 3, wherein the clamping pressure at which the brake lining carrier (15) and the brake lining (16) are clamped against each other is between 49 N/cm² and 150 N/cm².

5. Method according to any one of claims 1 to 4, wherein the clamping pressure for clamping the brake lining carrier (15) and the brake lining (16) against each other is produced by means of a specifically pressure-activated tightening strap or pressing stamp.

6. Method according to claim 5, wherein the specific pressure of the tightening strap (17) or pressing stamp is regulated so that the clamping pressure, at which the brake lining carrier (15) and the brake lining (16) are clamped against each other, is kept constant.

7. Method according to claim 5 or 6, wherein a specific pressure is precisely specified for each component of a clamping device (20).

8. Method according to claim 7, wherein a specific pressure is precisely specified for each component of the clamping device (20) before each clamping operation.

9. Method according to any one of claims 5 to 8, wherein the clamping pressure is set and specified in a precisely defined manner for each brake lining material to be processed, for each adhesive, for each material of the brake lining carrier (15) and/or for each quality to be achieved in respect of the finished brake lining carrier (15) which is securely connected to the brake lining (16).

10. Method according to any one of claims 1 to 9, wherein the brake lining carrier (15) is heated to a heating temperature of from 200 to 240, preferably from 200 to 230°C.

11. Method according to any one of claims 1 to 10, wherein the brake lining carrier (15) is heated directly in the manner of a resistance heating element.

12. Method according to any one of claims 1 to 11, wherein the brake lining carrier (15) is cooled by switching off a heating device which heats the brake lining carrier (15).

13. Method according to any one of claims 1 to 12, wherein the brake lining carrier (15) and the brake lining (16) in the state clamped against each other are acted upon with a hot current of air (27) in order to be heated to the heating temperature.

14. Method according to claim 13, wherein the temperature of the hot current of air (27) is kept at the level of the heating temperature.

15. Method according to claim 13 or 14, wherein the temperature of the hot current of air (27) is kept above 200°C.

16. Method according to any one of claims 13 to 15, wherein the temperature of the hot current of air (27) is kept constant during the heating operation and/or the period of time before the start of the cooling process.

17. Method according to any one of claims 1 to 16, wherein the cooling operation is effected with spatial separation from the heating operation.

18. Method according to any one of claims 1 to 17, wherein the brake lining carrier (15) and the brake lining (16) are acted upon with a comparatively cool current of air in order to be cooled to the cooling temperature in a cooling station.

19. Method according to claim 18, wherein the temperature of the comparatively cool current of air is less than 100°C.

20. Method according to claim 18 or 19, wherein the temperature of the comparatively cool current of air is kept constant.

21. Method according to any one of claims 1 to 20, wherein the brake lining carrier (15) is the metal shoe (15) of a brake shoe of a drum brake.

22. Method according to any one of claims 1 to 20, wherein the brake lining carrier is the lining carrier plate of a disk brake or a similarly shaped element.

23. Apparatus for adhesively bonding a brake lining (16) to a brake lining carrier (15), having a clamping device (11, 12, 13, 14, 17, 18; 20), wherein the brake lining (16) and the brake lining carrier (15) can be pressed against each other, and having a heating device (23), by means of which the brake lining carrier (15) can be heated, and having a cooling device, by means of which the heated brake lining carrier (15) can be cooled, **characterised in that** the clamping device (11, 12, 13, 14, 17, 18; 20) has a clamping cylinder (22) which is controlled in such a manner that the clamping pressure, at which the brake lining carrier (15) and the brake lining (16) are clamped against each other, is kept constant whilst taking into consideration the temperature which changes during the heating and the cooling operation.

24. Apparatus according to claim 23, having a tightening strap (17) or a pressing stamp, by means of which the brake lining (16) can be pressed against the brake lining carrier (15) at a constant pressure.

25. Apparatus according to claim 23 or 24, wherein the heating device (23) and/or the cooling device has/have a fan (25), by means of which the brake lining carrier (15) and the brake lining (16) in the state clamped against each other can be acted upon with a hot (27) or a comparatively cool current of air at a constant rate of flow.

26. Apparatus according to claim 25, wherein the heating device has a heat exchanger (26), by means of which the temperature of the hot current of air (27) can be kept constant.

27. Apparatus according to claim 25 or 26, wherein a flow duct (24) of the heating (23) and/or the cooling device has, at least in the outlet portion (28) and inlet portion (29) thereof, that are associated with the brake lining carrier (15) and the brake lining (16), a cross-section which is so large that the entire arrangement comprising the brake lining carrier (15) and the brake lining (16) can be acted upon uniformly with the hot (27) or the comparatively cool current of air.

## Revendications

1. Procédé pour coller une garniture de frein (16) sur un support de garniture (15), dans lequel on applique un adhésif sur la garniture de frein (16) et/ou sur le support de garniture (15), on presse l'un contre l'autre le support de garniture (15) et la garniture de frein (16), puis on chauffe le support de garniture avec la garniture de frein (16) pressée contre celui-ci, on le maintient à la température de chauffage atteinte et on le refroidit, **caractérisé en ce que** le processus de chauffage dure jusqu'à 2 min environ, la durée de maintien de la température, une fois la température de chauffage atteinte, est d'environ 1 min à 2 min et le processus consécutif de refroidissement dure jusqu'à 1 min environ, et **en ce que** la pression de serrage, avec laquelle le support de garniture (15) et la garniture de frein (16) sont pressés l'un contre l'autre, est maintenue constante en tenant compte de l'évolution de la température au cours du processus de chauffage et du processus de refroidissement.

2. Procédé selon la revendication 1, dans lequel la pression de serrage entre le support de garniture (15) et la garniture de frein (16) est relâchée lorsque le support de garniture (15) et la garniture de frein (16) ont refroidi.

3. Procédé selon la revendication 1 ou 2, dans lequel on serre l'un contre l'autre le support de garniture (15) et la garniture de frein (16) et on les chauffe à l'état pressé jusqu'à une température de chauffage donnée, on les maintient pendant un certain temps à ladite température de chauffage donnée et on les refroidit jusqu'à une température de refroidissement donnée.

4. Procédé selon une des revendications 1 à 3, dans lequel la pression de serrage avec laquelle on presse l'un contre l'autre le support de garniture (15) et la garniture de frein (16) est comprise entre 49 N/cm² et 150 N/cm².

5. Procédé selon une des revendications 1 à 4, dans lequel la pression de serrage pour presser l'un contre l'autre le support de garniture (15) et la garniture de frein (16) est produite au moyen d'une bande de serrage soumise à une pression spécifique ou par un piston de serrage.

6. Procédé selon la revendication 5, dans lequel on règle la pression spécifique de la bande de serrage (17) ou du piston de serrage de telle sorte que la pression de serrage avec laquelle le support de garniture (15) et la garniture de frein (16) sont pressés l'un contre l'autre soit maintenue constante.

7. Procédé selon la revendication 5 ou 6, dans lequel on fixe de manière précise une pression spécifique pour chaque élément d'un dispositif de serrage (20).

8. Procédé selon la revendication 7, dans lequel on fixe de manière précise une pression spécifique pour chaque élément du dispositif de serrage (20), avant chaque opération de serrage.

9. Procédé selon une des revendications 5 à 8, dans lequel on règle de manière précise et on indique la pression de serrage pour chaque matériau de garniture de frein utilisé, pour chaque adhésif, pour chaque matériau de support de garniture (15) et/ou pour chaque qualité du support de garniture (15) terminé lié à la garniture de frein (16) devant être atteinte.

10. Procédé selon une des revendications 1 à 9, dans lequel on chauffe le support de garniture (15) à une température de chauffage comprise entre 200 et 240 °C, de préférence entre 200 et 230°C.

11. Procédé selon une des revendications 1 à 10, dans lequel on chauffe le support de garniture (15) directement sous la forme d'un chauffage à résistance.

12. Procédé selon une des revendications 1 à 11, dans lequel on refroidit le support de garniture en coupant un dispositif de chauffage qui assure le réchauffage du support de garniture (15).

13. Procédé selon une des revendications 1 à 12, dans lequel on expose le support de garniture (15) et la garniture de frein (16) à l'état pressé l'un contre l'autre à un flux d'air chaud (27) pour les réchauffer à la température de chauffage.

14. Procédé selon la revendication 13, dans lequel on maintient la température du flux d'air chaud (27) au niveau de la température de chauffage.

15. Procédé selon la revendication 13 ou 14, dans lequel on maintient la température du flux d'air chaud (27) supérieure à 200 °C.

16. Procédé selon une des revendications 13 à 15, dans lequel on maintient constante la température du flux d'air chaud (27) pendant le processus de chauffage et/ou le laps de temps jusqu'au début du refroidissement.

17. Procédé selon une des revendications 1 à 16, dans lequel le processus de refroidissement est séparé dans l'espace du processus de chauffage.

18. Procédé selon une des revendications 1 à 17, dans lequel on expose le support de garniture (15) et la garniture de frein (16), à un flux d'air relativement froid dans un poste de refroidissement, aux fins de les refroidir à la température de refroidissement.

19. Procédé selon la revendication 18, dans lequel la température du flux d'air relativement froid est inférieure à 100 °C.

20. Procédé selon la revendication 18 ou 19, dans lequel on maintient constante la température du flux d'air relativement froid.

21. Procédé selon une des revendications 1 à 20, dans lequel le support de garniture (15) est le sabot métallique (15) d'une mâchoire de frein à tambour.

22. Procédé selon une des revendications 1 à 20, dans lequel le support de garniture est la plaquette-support de garniture d'un frein à disque ou un élément similaire.

23. Dispositif pour coller une garniture de frein (16) sur un support de garniture (15), comprenant un dispositif de serrage (11, 12, 13, 14, 17, 18; 20), dans lequel le support de garniture (15) et la garniture de frein (16) peuvent être pressés l'un contre l'autre, un dispositif de chauffage (23), à l'aide duquel le support de garniture (15) peut être chauffé, et un dispositif de refroidissement, à l'aide duquel le support de garniture (15) chauffé peut être refroidi, **caractérisé en ce que** le dispositif de serrage (11, 12, 13, 14, 17, 18; 20) comprend un vérin de serrage (22) qui est commandé de manière telle, que la pression de serrage, avec laquelle le support de garniture (15) et la garniture de frein (16) sont pressés l'un contre l'autre, est maintenue constante, en tenant compte de l'évolution de la température au cours du processus de chauffage et du processus de refroidissement.

24. Dispositif selon la revendication 23, comprenant une bande serrage (17) ou un piston de serrage, à l'aide duquel la garniture de frein (16) peut être pressée avec une pression constante contre le support de garniture (15).

25. Dispositif selon la revendication 23 ou 24, dans lequel le dispositif de chauffage (23) et/ou le dispositif de refroidissement comporte(nt) un ventilateur (25), à l'aide duquel le support de garniture (15) et la garniture de frein (16) pressés l'un contre l'autre peuvent être exposés à un flux d'air chaud (27) ou d'air relativement froid, avec un débit constant.

26. Dispositif selon la revendication 25, dans lequel le dispositif de chauffage comprend un échangeur de chaleur (26) à l'aide duquel la température du flux d'air chaud (27) peut être maintenue constante.

27. Dispositif selon la revendication 25 ou 26, dans lequel un canal d'écoulement (24) du dispositif de chauffage (23) et/ou de refroidissement, au moins dans ses tronçons de sortie (28) et d'entrée (29) associés au support de garniture (15) et à la garniture de frein (16), présente une section transversale telle, que l'ensemble de la pièce, formée du support de garniture (15) et de la garniture de frein (16), soit exposé de manière homogène au flux d'air chaud (27) ou au flux d'air relativement froid.
